(19) Europäisches Patentamt
European Patent Office
Office européen des brevets

(11) **EP 4 275 788 A1**

(12) **EUROPEAN PATENT APPLICATION**
published in accordance with Art. 153(4) EPC

(43) Date of publication:
**15.11.2023 Bulletin 2023/46**

(21) Application number: **22736636.6**

(22) Date of filing: **11.01.2022**

(51) International Patent Classification (IPC):
*B01J 29/08* (2006.01)    *B01J 35/10* (2006.01)
*B01J 37/10* (2006.01)    *C10G 11/05* (2006.01)

(52) Cooperative Patent Classification (CPC):
**B01J 29/08; B01J 35/08; B01J 35/10; B01J 37/10;
C10G 11/05;** Y02P 20/52

(86) International application number:
**PCT/CN2022/071293**

(87) International publication number:
**WO 2022/148475 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.01.2021 CN 202110028539**

(71) Applicants:
• **China Petroleum & Chemical Corporation
Beijing 100728 (CN)**
• **Sinopec Research Institute of Petroleum
Processing Co., Ltd.
Beijing 100083 (CN)**

(72) Inventors:
• **LUO, Yibin
Beijing 100083 (CN)**
• **WANG, Chengqiang
Beijing 100083 (CN)**
• **LIANG, Weijun
Beijing 100029 (CN)**
• **SHU, Xingtian
Beijing 100083 (CN)**
• **LI, Jun
Yueyang, Hunan 414012 (CN)**
• **XING, Enhui
Beijing 100083 (CN)**

(74) Representative: **Hoffmann Eitle
Patent- und Rechtsanwälte PartmbB
Arabellastraße 30
81925 München (DE)**

(54) **CATALYTIC CRACKING CATALYST, AND PREPARATION METHOD AND PREPARATION SYSTEM THEREFOR**

(57)    The present invention provides a process for preparing a catalytic cracking catalyst, which is characterized in that the process comprises: mixing raw materials including a rare earth-containing NaY molecular sieve obtained by contacting a NaY molecular sieve with a rare-earth salt solution or a mixed solution of rare-earth salt solution and ammonium salt solution, filtering, and water-washing, an inorganic oxide binder and a natural mineral, slurrying and shaping into shaped bodies; hydrothermally calcining shaped bodies in an atmosphere condition where a pressure is externally applied and an aqueous solution containing an acidic substance or an alkaline substance is extennally added; and then ammonium-exchanging to remove the alkali metal. The present invention optimizes and shortens the preparation process of the catalyst, which can reduce the preparation cost, and the prepared catalyst has excellent heavy oil conversion ability, higher gasoline and diesel yield, lower coke selectivity, and relatively reduces the used amount of the molecular sieve in the catalyst.

EP 4 275 788 A1

```
┌─────────────────────────────┐
│     NaY molecular sieve     │
└─────────────────────────────┘
              │
              ▼
┌─────────────────────────────┐
│    Rare earth exchanging    │
└─────────────────────────────┘
              │
              ▼
┌─────────────────────────────┐
│   Filtering, water-washing  │
└─────────────────────────────┘
              │
              ▼
┌─────────────────────────────┐
│   Raw material mixing and   │
│           shaping           │
└─────────────────────────────┘
              │
              ▼
┌─────────────────────────────┐
│  Pressurized hydrothermal   │
│          calcining          │
└─────────────────────────────┘
              │
              ▼
┌─────────────────────────────┐
│        Post-washing         │
└─────────────────────────────┘
              │
              ▼
┌─────────────────────────────┐
│           Drying            │──────▶  Finished cracking agent product
└─────────────────────────────┘
```

Figure 2

**Description**

**Technical Field**

The present invention relates to a preparation process and preparation system for catalytic cracking catalyst, and furthermore, the present invention relates to a short-stage preparation process and preparation system for a catalytic cracking catalyst containing rare earth NaY molecular sieve.

**Background technology**

Catalytic cracking is the most important production technology in oil refineries at present, and catalytic cracking units are used to convert heavy oils and residues into gasoline, diesel, and light gas components. In the industry, a catalytic cracking unit must include two parts of the reaction and the high-temperature regeneration of catalyst. Therefore, it is necessary for the catalyst to consider the factors such as catalytic activity and selectivity. Compared with other types of molecular sieves, the Y-type molecular sieve is more used as an active component of the catalytic cracking catalyst in a cracking reaction and has a main function of producing gasoline-range molecule products in a catalytic cracking catalyst.

The rare earth exchanged rare earth Y molecular sieve is a high-activity component of the catalytic cracking catalyst. Rare earth ions in the rare earth Y molecular sieve migrate from the supercage to the sodalite cage and form an oxygen bridge-containing multinuclear cation structure, increasing the stability of the acid center of the molecular sieve in a high-temperature hydrothermal environment, improving the cracking activity and the activity stability of the molecular sieve catalyst, and increasing the heavy oil conversion activity and the selectivity of the catalyst. However, when the NaY molecular sieve is ion-exchanged with an aqueous solution of rare earth salt, hydrated rare earth ions with a diameter of about 0.79 nm are difficult to enter the sodalite cages through the six-membered ring windows (about 0.26 nm in diameter) of the Y molecular sieve. Therefore, the hydrated layer around the rare earth ions must be removed by calcination during the preparation of the rare earth Y molecular sieve, so that the rare earth ions can enter into the sodalite cages and the hexagonal prisms, and the sodium ions in the cages also migrate out to the supercages by means of the calcination process, and in conclusion, the calcination accelerates the intragranular exchange between solid ions, and creates conditions for the exchange of the molecular sieve with other cations such as $NH_4^+$ and $RE^{3+}$ in the aqueous solution and for reducing the $Na^+$ content of the molecular sieve (USP3402996). Therefore, how to promote the migration of rare earth ions and improve the occupancy of rare earth ions on the cation position that can be locked (in the small cage) will be directly related to the performance of the rare earth Y molecular sieve and influence the activity stability of the catalyst taking the rare earth Y molecular sieve as the active component. In order to promote the migration of rare earth ions into sodalite cages, the industry usually adopts high-temperature calcining or high-temperature hydrothermal calcining, however, besides the more strict requirements on the material of the industrial calcining furnace, the too high calcining temperature tends to cause the rare earth ions locked in position to return to the large cages (Zeolite, 6(4), 235, 1986). The actual state of the current industrial calcining technology includes the rare earth NaY (having a sodium oxide content of 4.5-6.0%) molecular sieve filter cake obtained after the exchange of NaY with $RE^{3+}$ needs calcining at a high temperature (550-580°C) to perform the solid-state ion exchange, and then removing the sodium by the aqueous solution exchange.

The current major problem is that the exchanging degree of solid-state ions needs to be further improved. Therefore, how to make as many rare earth ions migrate to the small cage position as possible at a limited calcining temperature to further improve the stability of the molecular sieve becomes a great technical problem to be solved in the industry.

CN1026225C discloses a process for preparing rare earth Y molecular sieve, which comprises the steps of ion-exchanging the NaY molecular sieve with $RE^{3+}$ in an aqueous solution once, and then calcining in 100% flowing water vapor at 450-600°C for 1-3 hours.

CN103508467A discloses a rare earth Y molecular sieve and a preparation method thereof. The method comprise contacting a NaY molecular sieve with a rare earth salt solution or a mixed solution of ammonium salt and rare earth salt solution, filtering, water washing, drying and calcining to produce rare earth sodium Y molecular sieve; then slurrying the obtained molecular sieve and contacting with the ammonium salt solution, and then directly mixing with the rare earth salt solution without filtering and adjusting the pH value of the slurry with alkaline liquid for rare earth deposition, or slurrying the rare earth sodium Y molecular sieve and contacting with the mixed solution of ammonium salt and rare earth salt solution, then adjusting the pH value of the slurry with alkaline liquid for rare earth deposition; then filtering, drying, the second calcining to produce rare earth Y molecular sieve. This method requires a process of two exchanings and two calcinings combined with the deposition of rare earth.

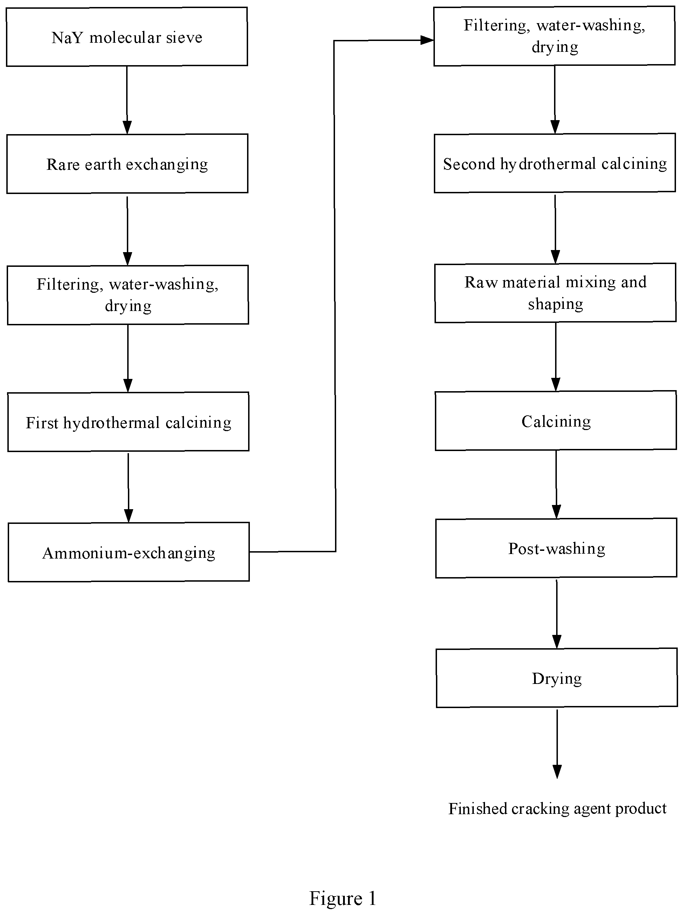

In the prior art, due to the limitation of the calcination process, in the rare earth Y molecular sieve, at a limited calcination temperature, during the migration of the rare earth ions to the small cages, some rare earth ions still exist in the supercages and fail to migrate to the small cages in time, resulting in limiting the hydrothermal stability of the rare earth Y molecular sieve, which in turn affects its heavy oil cracking conversion ability in catalytic cracking catalysts. In the existing industrial production, the preparation process of the catalytic cracking catalyst is shown in Figure 1. NaY molecular sieves are exchanged with rare earth, followed by filtering, water-washing, drying (flash drying), the first hydrothermal calcining, ammonium-exchanging, filtering and water-washing, and drying (flash-drying), the second hydrothermal calcining, raw material mixing and shaping (spray-drying), calcining, post-washing (ammonium-exchanging, filtering, water-washing), and drying (flash drying) to obtain the finished product of the catalytic cracking catalyst. In order to increase the exchanging degree of solid-state ions, two hydrothermal calcining processes and another calcining process are required, and its technological process is relatively complex.

## Summary of the Invention

Aiming at the problem in the prior art that the process of improving the solid-state ion exchanging degree of the rare earth NaY molecular sieve in the catalytic cracking catalyst is complex and the catalyst preparation process is relatively complicated, one of the objects of the present invention is to provide a catalyst preparation process with a simplified technological process and a catalytic cracking catalyst obtained therefrom.

The second object of the present invention is to provide a preparation system for the preparation process for the above-mentioned simplified process.

In order to achieve the above objects, the present invention provides a catalytic cracking catalyst, which is characterized in that the catalyst contains a rare earth-containing molecular sieve, and the rare earth dispersion D value of the catalyst is 0.8-1, preferably 0.85-0.99, more preferably 0.86-0.98.

According to the catalytic cracking catalyst of the present invention, said rare earth-containing molecular sieve has a FAU structure, preferably said rare earth-containing molecular sieve is a rare earth-containing Y-type molecular sieve.

According to the catalytic cracking catalyst of the present invention, on the 100 wt% dry basis, the catalytic cracking catalyst contains:

   10-30 wt% of an inorganic oxide binder,
   30-50 wt% of a natural mineral, and
   20-60 wt% of a rare earth-containing molecular sieve;
   preferably, the catalytic cracking catalyst contains:
   15-30 wt% of an inorganic oxide binder,
   33-48 wt% of a natural mineral, and
   30-50 wt% of a rare earth-containing molecular sieve.

According to the catalytic cracking catalyst of the present invention, on the dry basis, the alkali metal content of the catalytic cracking catalyst (as oxide) is ≤0.3 wt%, preferably, ≤0.2 wt%.

According to the catalytic cracking catalyst of the present invention, the crystallinity retention of the catalytic cracking catalyst is 42.5%-45.5%, wherein crystallinity retention (%)=100-(crystallinity of fresh sample-crystallinity of aged sample)/crystallinity of fresh sample* 100, the aged sample is obtained by aging a fresh sample at 800°C in a 100% water vapor for 17 hours.

To achieve the above objects, the present invention provides a process for preparing the catalytic cracking catalyst, which is characterized in that the process comprises: mixing raw materials including a rare earth-containing NaY molecular sieve obtained by contacting a NaY molecular sieve with a rare-earth salt solution or a mixed solution of rare-earth salt solution and ammonium salt solution, filtering, and water-washing, an inorganic oxide binder and a natural mineral, slurrying and shaping into shaped bodies; Hydrothermally calcining shaped bodies in an atmosphere condition where a pressure is externally applied and an aqueous solution containing an acidic substance or an alkaline substance is extennally added; and then ammonium-exchanging to remove the alkali metal.

In the preparation process of the present invention, on the dry basis, the catalytic cracking catalyst contains 10-30 wt% of an inorganic oxide binder, 30-50 wt% of a natural mineral, and 20-60 wt% of a rare earth-containing NaY molecular sieve. Preferably, it contains 15-25 wt% of an inorganic oxide binder, 33-48 wt% of a natural mineral and 30-50 wt% of a rare earth-containing NaY molecular sieve.

With the EPMA (Electron Probe Micro-Analysis, or Electron Probing Mapping Analysis) analysis of the catalytic cracking catalyst, the rare earth D value of the catalyst is >_80%, preferably ≥85%.

In the present invention, the D value represents the uniformity of distribution of rare earth atoms in the catalyst. The closer the D value is to 100%, the more uniform the distribution. Specifically, any section of a catalyst (usually in the shape of microspheres, e.g. having a diameter of 1-150 $\mu$m) is randomly selected, 20 small squares with a side length of 10nm on said section are selected, and the rare earth content (number of atoms/number of atoms) within each small square is obtained through electron probe microanalysis (EPMA), the ratio of the lowest value of the 20 rare earth contents to the average value of the 20 rare earth contents is taken as the d value of the section, and the average value of the d values of 5 sections with a spacing greater than 50nm between each other is taken as the D value of the catalyst.

In the preparation process of the present invention, the catalytic cracking catalyst has an alkali metal (as oxide) content of ≤0.3 wt% on the dry basis.

In the preparation process of the present invention, the rare-earth salt solution is selected from an aqueous solution of one of or two or more of lanthanum chloride, cerium chloride, praseodymium chloride, and neodymium chloride; the ammonium salt solution is selected from one of or a mixture of two or more of ammonium chloride solution, ammonium nitrate solution, ammonium carbonate solution and ammonium bicarbonate solution.

In the preparation process of the present invention, the contacting of the NaY molecular sieve and a rare-earth salt solution or a mixed solution of rare-earth salt solution and ammonium salt is performed at a pH of 3.0-5.0 at a weight ratio of water to molecular sieve of 5-30 at room temperature to 100°C (for example 40-90°C).

In the preparation process of the present invention, in said rare earth-containing NaY molecular sieve, as rare earth oxide, the rare earth content is 1-20 wt%, preferably 8-15 wt%, the unit cell constant is 2.440-2.470 nm, and the crystallinity is 30-60%.

In the preparation process of the present invention, said inorganic oxide binder is at least one selected from silica sol, alumina sol, peptized pseudo-boehmite, silica alumina sol and phosphorus-containing alumina sol. Said peptized pseudo-boehmite is obtained by mixing pseudo-boehmite and water, slurrying to form a slurry, and adding hydrochloric acid into the slurry for acidification, and the weight ratio of said hydrochloric acid to pseudo-boehmite on the dry basis is 0.05-0.50. Preferably, said inorganic oxide binder is pseudo-boehmite and alumina sol, preferably in a weight ratio of (0.1-2): 1.

In the preparation process of the present invention, said natural mineral is at least one selected from kaolin, halloysite, montmorillonite, diatomite, attapulgite, sepiolite, keramite, hydrotalcite, bentonite and rectorite.

In the preparation process of the present invention, said shaping is pelleting by spray-drying, and said shaping produces microspheres having a diameter of 1-150 μm. The shaping operation is well known to those skilled in the art and will not be described in details herein.

In the preparation process of the present invention, the acidic substance is selected from one of or a mixture of two or more of ammonium chloride, ammonium sulfate, ammonium carbonate, ammonium bicarbonate, ammonium carbonate, ammonium phosphate, ammonium dihydrogen phosphate, diammonium hydrogen phosphate, hydrochloric acid, sulfuric acid and nitric acid. The alkaline substance is selected from one of or a mixture of two or more of ammonia water, a buffer solution of ammonia water and ammonium chloride, sodium hydroxide, sodium carbonate, and sodium bicarbonate. The addition of the acidic substance or the alkaline substance and the dissolution thereof results in an aqueous solution having a concentration of 1-50 %. The mass ratio of the acidic substance or alkaline substance to the molecular sieve is (0.01-0.5):1.

In the preparation process of the present invention, said hydrothermal calcining treatment is performed in an atmosphere condition where an external pressure is applied and water is externally added. The atmosphere condition is created by externally applying a pressure and externally addeing water, and has a gauge pressure of 0.01-1.0 MPa and contains 1-100% water vapor. Preferably, the atmosphere condition has a gauge pressure of 0.1-0.8 MPa, more preferably 0.3-0.6 MPa and contains 30%-100% water vapor, more preferably 60-100% water vapor. Said hydrothermal calcining treatment is performed at 300-800°C, preferably 400-600°C. The externally applied pressure refers to applying a certain pressure from the outside during the process of hydrothermally calcining the shaped bodies. For example, it can be carried out by introducing an inert gas from the outside to maintain a certain back-pressure. The amount of externally applied water is to meet the requirement that the atmosphere condition contains 1-100% water vapor.

In the preparation process of the present invention, the ammonium-exchanging is to reduce the alkali metal content in the catalyst to ≤0.3 wt% (e.g., <_0.2wt%), and usually the ammonium-exchanging is necessarily followed by washing and drying (e.g., flash drying) to produce a finished product of catalytic cracking catalyst.

In the preparation process of the present invention, besides the rare earth-containing NaY molecular sieve, the inorganic oxide binder, and the natural mineral, said raw materials can also contain the ZSM-5 molecular sieve.

In order to achieve the above-mentioned objects, the present invention further provides a preparation system of a catalytic cracking catalyst, which is characterized in that the system is mainly composed of a NaY molecular sieve-rare earth exchanging device, a raw material mixing device, a shaping device, and a pressurized hydrothermal calcining device.

In said preparation system, said raw material mixing device receives the catalyst raw materials including the rare earth-containing NaY molecular sieve obtained by contacting with a rare-earth salt solution or a mixed solution of rare-earth salt solution and ammonium salt solution, the inorganic oxide binder, and the natural mineral.

In said preparation system, said shaping device is a device of shaping by spray-drying.

In said preparation system, the hydrothermally calcining device is provided with an inlet of the aqueous solution containing an acidic substance or an alkaline substance, and a gas pressurization joint.

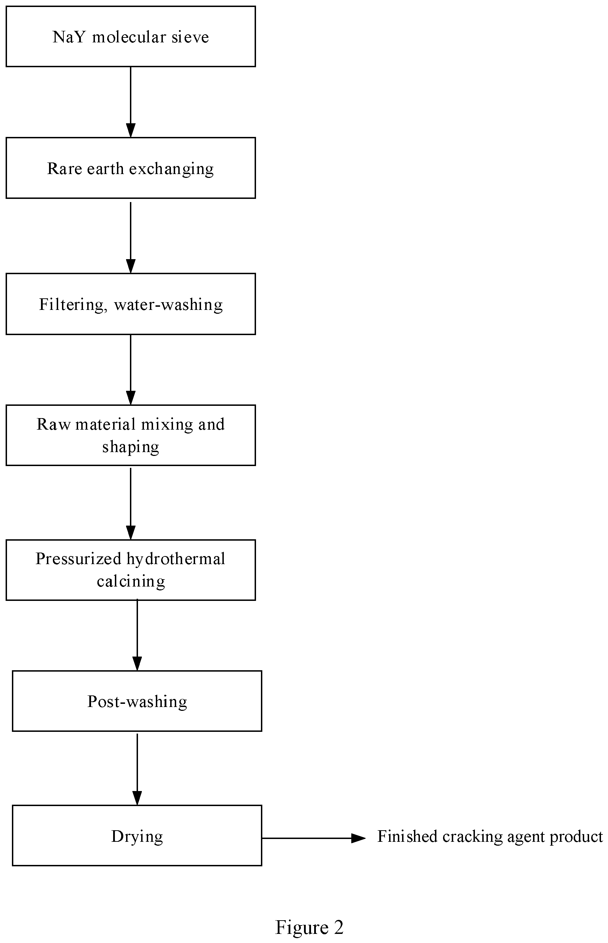

A specific form of the preparation system provided by the present invention is shown in Figure 2. It can be seen from Figure 2 that in the NaY molecular sieve-rare earth exchanging device, a NaY molecular sieve is contacted with a rare-earth salt solution or a rare-earth salt solution and an ammonium salt solution to perform the rare-earth exchanging to produce a rare earth-containing NaY molecular sieve, followed by filtering and water-washing to obtain a filter cake; in the raw material mixing device, the catalyst raw materials including a rare earth-containing NaY molecular sieve, an inorganic oxide binder, and a natural mineral are mixed and shaped by spray-drying; in the pressurized hydrothermal calcining device, the spray-dried shaped bodies are contacted with an aqueous solution containing an acidic substance or an alkaline substance, and subjected to a pressure treatment.

The present invention provides the following technical solutions:

1. A process for preparing a catalytic cracking catalyst, which is characterized in that the process comprises: mixing raw materials including a rare earth-containing NaY molecular sieve obtained by contacting a NaY molecular sieve with a rare-earth salt solution or a mixed solution of rare-earth salt solution and ammonium salt solution, filtering, and water-washing, an inorganic oxide binder and a natural mineral, slurrying and shaping into shaped bodies; hydrothermally calcining shaped bodies in an atmosphere condition where a pressure is externally applied and an aqueous solution containing an acidic substance or an alkaline substance is extennally added; and then ammonium-exchanging to remove an alkali metal.

2. The preparation process according to technical solution 1, wherein on the dry basis, the catalytic cracking catalyst contains 10-30 wt% of an inorganic oxide binder, 30-50 wt% of a natural mineral and 20-60 wt% of a rare earth-containing NaY molecular sieve; preferably, contains 15-25 wt% of an inorganic oxide binder, 33-48 wt% of a natural mineral and 30-50 wt% of a rare earth-containing NaY molecular sieve.

3. The preparation process according to technical solution 1, wherein the catalytic cracking catalyst, on the dry basis, contains ≤0.2 wt% of alkali metal (as oxide).

4. The preparation process according to technical solution 1, wherein the rare-earth salt solution is selected from an aqueous solution of one of or two or more of lanthanum chloride, cerium chloride, praseodymium chloride, and neodymium chloride; the ammonium salt solution is selected from one of or a mixture of two or more of ammonium chloride solution, ammonium nitrate solution, ammonium carbonate solution and ammonium bicarbonate solution.

5. The preparation process according to technical solution 1, wherein the contacting of the NaY molecular sieve and a rare-earth salt solution or a mixed solution of rare-earth salt solution and ammonium salt is performed at a pH of 3.0-5.0 at a weight ratio of water to molecular sieve of 5-30 at room temperature to 100°C (for example 40-90°C).

6. The preparation process according to technical solution 1, wherein in said rare earth-containing NaY molecular sieve, as rare earth oxide, the rare earth content is 1-20 wt%, preferably 8-15 wt%, the unit cell constant is 2.440-2.470 nm, and the crystallinity is 30-60%.

7. The preparation process according to technical solution 1, wherein said inorganic oxide binder is at least one selected from silica sol, alumina sol, peptized pseudo-boehmite, silica alumina sol and phosphorus-containing alumina sol.

8. The preparation process according to technical solution 7, wherein said peptized pseudo-boehmite is obtained by mixing pseudo-boehmite and water, slurrying to form a slurry, and adding hydrochloric acid into the slurry for acidification, and the weight ratio of said hydrochloric acid to pseudo-boehmite on the dry basis is 0.05-0.50.

9. The preparation process according to technical solution 8, wherein said inorganic oxide binder is pseudo-boehmite and alumina sol, preferably in a weight ratio of (0.1-2): 1.

10. The preparation process according to technical solution 1, wherein said natural mineral is at least one selected from kaolin, halloysite, montmorillonite, diatomite, attapulgite, sepiolite, keramite, hydrotalcite, bentonite and rectorite.

11. The preparation process according to technical solution 1, wherein said shaping is pelleting by spray-drying.

12. The preparation process according to technical solution 1, wherein the acidic substance is selected from one of or a mixture of two or more of ammonium chloride, ammonium sulfate, ammonium carbonate, ammonium bicarbonate, ammonium carbonate, ammonium phosphate, ammonium dihydrogen phosphate, diammonium hydrogen phosphate, hydrochloric acid, sulfuric acid and nitric acid.

13. The preparation process according to technical solution 1, wherein the alkaline substance is selected from one of or a mixture of two or more of ammonia water, a buffer solution of ammonia water and ammonium chloride, sodium hydroxide, sodium carbonate, and sodium bicarbonate.

14. The preparation process according to technical solution 1, wherein the atmosphere condition has a gauge pressure of 0.01-1.0 MPa and contains 1-100% water vapor.

15. The preparation process according to technical solution 14, wherein the atmosphere condition has a gauge pressure of 0.1-0.8 MPa, preferably 0.3-0.6 MPa and contains 30%-100% water vapor, preferably 60-100% water vapor.

16. The preparation process according to technical solution 1, wherein said hydrothermal calcining treatment is performed at 300-800°C, preferably 400-600°C.

17. The preparation process according to technical solution 1, wherein said raw materials further include ZSM-5 molecular sieve.

18. A preparation system of a catalytic cracking catalyst, which is characterized in that the system is mainly composed of a NaY molecular sieve-rare earth exchanging device, a raw material mixing device, a shaping device, and a pressurized hydrothermal calcining device.

19. The preparation system according to technical solution 18, wherein the NaY molecular sieve-rare earth exchanging device comprise an equipment for introducing the rare-earth salt solution or an equipment for introducing the rare-earth salt solution and the ammonium salt solution, and a filtering equipment, and a water-washing equipment.

20. The preparation system according to technical solution 18, wherein said raw material mixing device receives the catalyst raw materials including a rare earth-containing molecular sieve obtained from the NaY molecular sieve-rare earth exchanging device, and an inorganic oxide binder from the inorganic oxide binder-treating device.

21. The preparation system according to technical solution 18, wherein said shaping device is a device of shaping by spray-drying.

22. The preparation system according to technical solution 18, wherein said pressurized hydrothermal calcining device is provided with an inlet of the aqueous solution containing an acidic substance or an alkaline substance, and a gas pressurization joint.

The present invention also provides a group of the following technical solutions:

1. A catalytic cracking catalyst, which is characterized in that the catalyst contains a rare earth-containing molecular sieve, and the rare earth dispersion D value of the catalyst is 0.8-1, preferably 0.85-0.99, more preferably 0.86-0.98; For example, the D value is determined by randomly selecting any section of a catalyst, selecting 20 small squares with a side length of 10nm on said section, and obtaining the rare earth content (number of atoms/number of atoms) within each small square through electron probe microanalysis (EPMA), taking the ratio of the lowest value of the 20 rare earth contents to the average value of the 20 rare earth contents as the d value of the section, and taking the average value of the d values of 5 sections with a spacing greater than 50nm between each other as the D value of the catalyst.

2. The catalytic cracking catalyst according to any of the previous technical solutions, which is characterized in that said rare earth-containing molecular sieve has a FAU structure, preferably said rare earth-containing molecular sieve is a rare earth-containing Y-type molecular sieve.

3. The catalytic cracking catalyst according to any of the previous technical solutions, which is characterized in that on the 100 wt% dry basis, the catalytic cracking catalyst contains:

> 10-30 wt% of an inorganic oxide binder,
> 30-50 wt% of a natural mineral, and
> 20-60 wt% of a rare earth-containing molecular sieve;
> preferably, the catalytic cracking catalyst contains:
> 15-30 wt% of an inorganic oxide binder,
> 33-48 wt% of a natural mineral, and
> 30-50 wt% of a rare earth-containing molecular sieve.

4. The catalytic cracking catalyst according to any of the previous technical solutions, which is characterized in that on the dry basis, the alkali metal content of the catalytic cracking catalyst (as oxide) is ≤0.3 wt%, preferably, ≤0.2 wt%.

5. The catalytic cracking catalyst according to any of the previous technical solutions, which is characterized in that the crystallinity retention of the catalytic cracking catalyst is 42.5%-45.5%, wherein

> crystallinity retention (%) = 100 - (crystallinity of fresh sample - crystallinity of aged sample)/crystallinity of fresh sample * 100,
> the aged sample is obtained by aging a fresh sample at 800°C in a 100% water vapor for 17 hours.

6. A process for preparing a catalytic cracking catalyst according to any of the previous technical solutions, which is characterized in that the process comprises:

> (1) contacting a molecular sieve (e.g. NaY molecular sieve) with a rare-earth salt solution or a mixed solution of rare-earth salt solution and ammonium salt solution, and filtering and water-washing the obtained rare earth-containing molecular sieve;
> (2) mixing raw materials including an inorganic oxide binder, a natural mineral, and a rare earth-containing molecular sieve, slurrying, and shaping to obtain shaped bodies;

(3) hydrothermally calcining the shaped bodies in an atmosphere condition where a pressure is externally applied and an aqueous solution containing an acidic substance or an alkaline substance is extennally added;

(4) ammonium-exchanging the product of step (3).

7. The process according to any of the previous technical solutions, wherein the rare-earth salt solution is selected from an aqueous solution of one of or two or more of lanthanum chloride, cerium chloride, praseodymium chloride, and neodymium chloride; and the ammonium salt solution is selected from one of or a mixture of two or more of ammonium chloride solution, ammonium nitrate solution, ammonium carbonate solution and ammonium bicarbonate solution.

8. The process according to any of the previous technical solutions, wherein the contacting of the NaY molecular sieve and a rare-earth salt solution or a mixed solution of rare-earth salt solution and ammonium salt is performed at a pH of 3.0-5.0 at a weight ratio of water to molecular sieve of 5-30 at room temperature to 100°C (for example 40-90°C).

9. The process according to any of the previous technical solutions, wherein in said rare earth-containing NaY molecular sieve, as rare earth oxide, the rare earth content is 1-20 wt%, preferably 8-15 wt%, the unit cell constant is 2.440-2.470 nm, and the crystallinity is 30-60%.

10. The process according to any of the previous technical solutions, wherein said inorganic oxide binder is at least one selected from silica sol, alumina sol, peptized pseudo-boehmite, silica alumina sol and phosphorus-containing alumina sol.

11. The process according to any of the previous technical solutions, wherein said peptized pseudo-boehmite is obtained by mixing pseudo-boehmite and water, slurrying to form a slurry, and adding hydrochloric acid into the slurry for acidification, the weight ratio of said hydrochloric acid to pseudo-boehmite on the dry basis is 0.05-0.50.

12. The process according to any of the previous technical solutions, wherein said inorganic oxide binder is pseudo-boehmite and alumina sol, preferably in a weight ratio of (0.1-2): 1.

13. The process according to any of the previous technical solutions, wherein said natural mineral is at least one selected from kaolin, halloysite, montmorillonite, diatomite, attapulgite, sepiolite, keramite, hydrotalcite, bentonite and rectorite.

14. The process according to any of the previous technical solutions, wherein said shaping is pelleting by spray-drying.

15. The process according to any of the previous technical solutions, wherein the acidic substance is selected from one of or a mixture of two or more of ammonium chloride, ammonium sulfate, ammonium carbonate, ammonium bicarbonate, ammonium carbonate, ammonium phosphate, ammonium dihydrogen phosphate, diammonium hydrogen phosphate, hydrochloric acid, sulfuric acid and nitric acid.

16. The process according to any of the previous technical solutions, wherein the alkaline substance is selected from one of or a mixture of two or more of ammonia water, a buffer solution of ammonia water and ammonium chloride, sodium hydroxide, sodium carbonate, and sodium bicarbonate.

17. The process according to any of the previous technical solutions, wherein the atmosphere condition has a gauge pressure of 0.01-1.0 MPa and contains 1-100% water vapor.

18. The process according to any of the previous technical solutions, wherein the atmosphere condition has a gauge pressure of 0.1-0.8 MPa, preferably 0.3-0.6 MPa and contains 30%-100% water vapor, preferably 60-100% water vapor.

19. The process according to any of the previous technical solutions, wherein said hydrothermal calcining treatment is performed at 300-800°C, preferably 400-600°C.

20. The process according to any of the previous technical solutions, wherein said raw materials further include ZSM-5 molecular sieve.

18. A preparation system of a catalytic cracking catalyst according to any of technical solutions 1-5, which is characterized in that the system is mainly composed of a molecular sieve (e.g. NaY molecular sieve)-rare earth exchanging device, a raw material mixing device, a shaping device, and a pressurized hydrothermal calcining device.

22. The preparation system according to any of the previous technical solutions, wherein the molecular sieve-rare earth exchanging device comprises an equipment for introducing the rare-earth salt solution or an equipment for introducing the rare-earth salt solution and the ammonium salt solution, and a filtering equipment and a water-washing equipment.

23. The preparation system according to any of the previous technical solutions, wherein said raw material mixing device receives the catalyst raw materials including a rare earth-containing molecular sieve obtained from the molecular sieve-rare earth exchanging device, and an inorganic oxide binder from the inorganic oxide binder-treating device.

24. The preparation system according to any of the previous technical solutions, wherein said shaping device is a device of shaping by spray-drying.

25. The preparation system according to any of the previous technical solutions, wherein said pressurized hydrothermal calcining device is provided with an inlet of the aqueous solution containing an acidic substance or an alkaline substance, and a gas pressurization joint.

In the present invention, the amounts such as percentages are by weight unless otherwise indicated.

In the present invention, unless otherwise specified, the sum of the weight percentages of the components of the composition is 100wt%.

In the present invention, room temperature refers to 26°C.

In the present invention, for example, containing 1-100% water vapor refers to an air atmosphere having a moisture content of at least 1% or 100% water vapor atmosphere (pure water vapor atmosphere).

In the present invention, the D value represents the uniformity of distribution of rare earth atoms in the catalyst. The closer the D value is to 100%, the more uniform the distribution. Specifically, any section of a catalyst (usually in the shape of microspheres, e.g. having a diameter of 1-150 $\mu$m) is randomly selected, 20 small squares with a side length of 10nm on said section are selected, and the rare earth content (number of atoms/number of atoms) within each small square is obtained through electron probe microanalysis (EPMA), the ratio of the lowest value of the 20 rare earth contents to the average value of the 20 rare earth contents is taken as the d value of the section, and the average value of the d values of 5 sections with a spacing greater than 50nm between each other is taken as the D value of the catalyst.

The preparation process provided by the present invention has the characteristics of short preparation process, and the catalytic cracking catalyst prepared by the process has excellent heavy oil conversion ability, higher gasoline and diesel yield, and lower coke selectivity when used in heavy oil catalytic cracking; especially in the case of reducing the molecular sieve content in the catalyst, the beneficial effect of maintaining an equivalent conversion rate and increasing the gasoline and diesel yield can be obtained.

**Brief description of the drawings**

Figure 1 is the flowchart for preparing a conventional catalyst in the prior art.

Figure 2 is the flowchart for preparing a catalyst provided by the present invention.

**Detailed description**

The present invention, a short-stage preparation process of a catalytic cracking catalyst, will be further described below in conjunction with specific examples, but the present invention is not limited thereby.

In each example and each comparative example, the unit cell constant and the crystallinity of the rare earth NaY molecular sieve product were determined by X-ray diffraction (XRD).

The properties of other raw materials were as follows: Kaolin (Suzhou China Kaolin Company, having a solid content of 75wt%), alumina sol (Changling Catalyst Branch, having an alumina content of 21.5wt%), and pseudo-boehmite (having a solid content of 10wt%).

EPMA (Model JXA-8230 Electron Probe Microanalyzer) was used to quantitatively analyze the rare earth D value in the sample section. Specifically, the D value was determined by randomly selecting 5 sections of a sample with a spacing greater than 50nm between each other; selecting 20 small squares with a side length of 10nm on each section, and obtaining the rare earth content (number of atoms/number of atoms) within each small square through electron probe microanalysis (EPMA), taking the ratio of the lowest value of the 20 rare earth contents to the average value of the 20 rare earth contents as the d value of the section, and taking the average value of the d values of 5 sections as the rare earth D value of said sample.

Example 1

100g of NaY molecular sieve (Changling Division of Sinopec Catalyst Company, Loss on Ignition: 74.1 wt%, crystallinity: 89.3%, the same below) and 1800g of deionized water were mixed and stirred to form a slurry. 20mL of rare earth chloride solution having a concentration of 357g $RE_2O_3$/L and 2g of ammonium chloride solid were added. The slurry was uniformly stirred and warmed to 70°C. The slurry was adjusted with dilute hydrochloric acid to the pH of 4.5, stirred for 1.0 hour at the constant temperature, filtered, water-washed, and dried to produce a rare earth NaY molecular sieve.

Pseudo-boehmite and deionized water were mixed and stirred to form a slurry. Hydrochloric acid having a concentration of 36 wt% was added to the obtained slurry to peptize, wherein the acid-alumina ratio (i.e. the weight ratio of said 36wt% hydrochloric acid to pseudo-boehmite on the dry basis) was 0.20. The resulting system was warmed up to 65°C and acidified for 1 hour. Kaolin slurry and alumina sol were added respectively on the dry basis. The mixture was stirred for 20 minutes, and then the above-mentioned rare earth NaY molecular sieve was added thereto. The mixture was stirred for 30 minutes to produce a slurry having a solid content of 30wt%. The resulting slurry was spray-dried to produce microspherical catalyst (having a diameter of 1-150 μm).

In an environment where a pressure was externally applied and 7g of ammonia water was added, the microspherical catalyst was subjected to a pressurized hydrothermal calcining treatment at 500°C under a gauge pressure of 0.3 MPa in 100% water vapour atmosphere for 2 hours. Then the catalyst was washed at 60°C with an aqueous ammonium chloride solution (wherein ammonium chloride:microspherical catalyst:water=0.2:1:10) to the sodium oxide content of less than 0.30 wt%, then washed with deionized water and filtered for several times, and dried in a 120°C constant temperature oven for 12 hours to produce a catalyst sample, which was denoted as JC-1.

The composition on the dry basis and the dispersion D value of the catalyst sample JC-1 were shown in Table 1.

Example 2

100g of NaY molecular sieve and 1000g of deionized water were mixed and stirred to form a slurry. 16mL of rare earth chloride solution having a concentration of 357g $RE_2O_3$/L and 8g of ammonium chloride solid were added. The slurry was uniformly stirred and warmed to 60°C. The slurry was adjusted with dilute hydrochloric acid to the pH of 4.0, stirred for 1.5 hours at the constant temperature, filtered, water-washed, and dried to produce a rare earth NaY molecular sieve.

Pseudo-boehmite and deionized water were mixed and stirred to form a slurry. Hydrochloric acid having a concentration of 36 wt% was added to the obtained slurry to peptize, wherein the acid-alumina ratio (i.e. the weight ratio of said 36wt% hydrochloric acid to pseudo-boehmite on the dry basis) was 0.20. The resulting system was warmed up to 65°C and acidified for 1 hour. Kaolin slurry and alumina sol were added respectively on the dry basis. The mixture was stirred for 20 minutes, and then the above-mentioned rare earth NaY molecular sieve was added thereto. The mixture was stirred for 30 minutes to produce a slurry having a solid content of 30wt%. The resulting slurry was spray-dried to produce microspherical catalyst (having a diameter of 1-150 μm).

In an environment where a pressure was externally applied and an aqueous ammonium chloride solution containing 10g of ammonium chloride was added, the microspherical catalyst was subjected to a pressurized hydrothermal calcining treatment at 430°C under a gauge pressure of 0.8 MPa in 100% water vapour atmosphere for 0.5 hours. Then the catalyst was washed at 60°C with an aqueous ammonium chloride solution (wherein ammonium chloride:microspherical catalyst:water= 0.2:1:10) to the sodium oxide content of less than 0.30 wt%, then washed with deionized water and filtered for several times, and dried in a 120°C constant temperature oven for 12 hours to produce a catalyst sample, which was denoted as JC-2.

The composition on the dry basis and the dispersion D value of the catalyst sample JC-2 were shown in Table 1.

Example 3

100g of NaY molecular sieve and 2200g of deionized water were mixed and stirred to form a slurry. 24mL of rare earth chloride solution having a concentration of 357g $RE_2O_3$/L was added. The slurry was uniformly stirred and warmed to 70°C. The slurry was adjusted with dilute hydrochloric acid to the pH of 3.5, stirred for 1 hour at the constant temperature, filtered, water-washed, and dried to produce a rare earth NaY molecular sieve.

Pseudo-boehmite and deionized water were mixed and stirred to form a slurry. Hydrochloric acid having a concentration of 36 wt% was added to the obtained slurry to peptize, wherein the acid-alumina ratio (i.e. the weight ratio of said 36wt% hydrochloric acid to pseudo-boehmite on the dry basis) was 0.20. The resulting system was warmed up to 65°C and acidified for 1 hour. Kaolin slurry and alumina sol were added respectively on the dry basis. The mixture was stirred for 20 minutes, and then the above-mentioned rare earth NaY molecular sieve was added thereto. The mixture was stirred for 30 minutes to produce a slurry having a solid content of 30wt%. The resulting slurry was spray-dried to produce microspherical catalyst (having a diameter of 1-150 μm).

In an environment where a pressure was externally applied and an aqueous ammonium bicarbonate solution containing 12g of ammonium bicarbonate was added, the microspherical catalyst was subjected to a pressurized hydrothermal calcining treatment at 520°C under a gauge pressure of 0.4 MPa in 100% water vapour atmosphere for 1.5 hours. Then the catalyst was washed at 60°C with an aqueous ammonium chloride solution (wherein ammonium chloride:microspherical catalyst:water= 0.2:1:10) to the sodium oxide content of less than 0.30 wt%, then washed with deionized water and filtered for several times, and dried in a 120°C constant temperature oven for 12 hours to produce a catalyst sample, which was denoted as JC-3.

The composition on the dry basis and the dispersion D value of the catalyst sample JC-3 were shown in Table 1.

Example 4

100g of NaY molecular sieve and 2800g of deionized water were mixed and stirred to form a slurry. 28mL of rare earth chloride solution having a concentration of 357g $RE_2O_3$/L was added. The slurry was uniformly stirred and warmed to 80°C. The slurry was adjusted with dilute hydrochloric acid to the pH of 3.8, stirred for 1 hour at the constant temperature, filtered, water-washed, and dried to produce a rare earth NaY molecular sieve.

Pseudo-boehmite and deionized water were mixed and stirred to form a slurry. Hydrochloric acid having a concentration of 36 wt% was added to the obtained slurry to peptize, wherein the acid-alumina ratio (i.e. the weight ratio of said 36wt% hydrochloric acid to pseudo-boehmite on the dry basis) was 0.20. The resulting system was warmed up to 65°C and acidified for 1 hour. Kaolin slurry and alumina sol were added respectively on the dry basis. The mixture was stirred for 20 minutes, and then the above-mentioned rare earth NaY molecular sieve was added thereto. The mixture was stirred for 30 minutes to produce a slurry having a solid content of 30wt%. The resulting slurry was spray-dried to produce microspherical catalyst (having a diameter of 1-150 $\mu$m).

In an environment where a pressure was externally applied and an aqueous sodium carbonate solution containing 9g of sodium carbonate was added, the microspherical catalyst was subjected to a pressurized hydrothermal calcining treatment at 580°C under a gauge pressure of 0.5 MPa in 100% water vapour atmosphere for 2 hours. Then the catalyst was washed at 60°C with an aqueous ammonium chloride solution (wherein ammonium chloride:microspherical catalyst:water= 0.2:1:10) to the sodium oxide content of less than 0.30 wt%, then washed with deionized water and filtered for several times, and dried in a 120°C constant temperature oven for 12 hours to produce a catalyst sample, which was denoted as JC-4.

The composition on the dry basis and the dispersion D value of the catalyst sample JC-4 were shown in Table 1.

Example 5

100g of NaY molecular sieve and 2000g of deionized water were mixed and stirred to form a slurry. 32mL of rare earth chloride solution having a concentration of 357g $RE_2O_3$/L was added. The slurry was uniformly stirred and warmed to 70°C. The slurry was adjusted with dilute hydrochloric acid to the pH of 4.0, stirred for 1 hour at the constant temperature, filtered, water-washed, and dried to produce a rare earth NaY molecular sieve.

Pseudo-boehmite and deionized water were mixed and stirred to form a slurry. Hydrochloric acid having a concentration of 36 wt% was added to the obtained slurry to peptize, wherein the acid-alumina ratio (i.e. the weight ratio of said 36wt% hydrochloric acid to pseudo-boehmite on the dry basis) was 0.20. The resulting system was warmed up to 65°C and acidified for 1 hour. Kaolin slurry and alumina sol were added respectively on the dry basis. The mixture was stirred for 20 minutes, and then the above-mentioned rare earth NaY molecular sieve was added thereto. The mixture was stirred for 30 minutes to produce a slurry having a solid content of 30wt%. The resulting slurry was spray-dried to produce microspherical catalyst (having a diameter of 1-150 $\mu$m).

In an environment where a pressure was externally applied and a buffer solution of ammonium chloride and ammonia water containing 10 of ammonium chloride was added, the microspherical catalyst was subjected to a pressurized hydrothermal calcining treatment at 550°C under a gauge pressure of 0.4 MPa in 100% water vapour atmosphere for 1.5 hours. Then the catalyst was washed at 60°C with an aqueous ammonium chloride solution (wherein ammonium chloride:microspherical catalyst:water= 0.2:1:10) to the sodium oxide content of less than 0.30 wt%, then washed with deionized water and filtered for several times, and dried in a 120°C constant temperature oven for 12 hours to produce a catalyst sample, which was denoted as JC-5.

The composition on the dry basis and the dispersion D value of the catalyst sample JC-5 were shown in Table 1.

Example 6

100g of NaY molecular sieve and 1800g of deionized water were mixed and stirred to form a slurry. 20 mL of rare earth chloride solution having a concentration of 357g $RE_2O_3$/L and 2g of ammonium chloride solid were added. The slurry was uniformly stirred and warmed to 70°C. The slurry was adjusted with dilute hydrochloric acid to the pH of 4.5, stirred for 1 hour at the constant temperature, filtered, water-washed, and dried to produce a rare earth NaY molecular sieve.

Pseudo-boehmite and deionized water were mixed and stirred to form a slurry. Hydrochloric acid having a concentration of 36 wt% was added to the obtained slurry to peptize, wherein the acid-alumina ratio (i.e. the weight ratio of said 36wt% hydrochloric acid to pseudo-boehmite on the dry basis) was 0.20. The resulting system was warmed up to 65°C and acidified for 1 hour. Kaolin slurry and alumina sol were added respectively on the dry basis. The mixture was stirred for 20 minutes, and then the above-mentioned rare earth NaY molecular sieve was added thereto. The mixture was stirred for 30 minutes to produce a slurry having a solid content of 30wt%. The resulting slurry was spray-dried to produce microspherical catalyst (having a diameter of 1-150 $\mu$m).

In an environment where a pressure was externally applied and 2g hydrochloric acid and water were added, the microspherical catalyst was subjected to a pressurized hydrothermal calcining treatment at 430°C under a gauge pressure of 0.6 MPa in 100% water vapour atmosphere for 2 hours. Then the catalyst was washed at 60°C with an aqueous ammonium chloride solution (wherein ammonium chloride:microspherical catalyst:water= 0.2:1:10) to the sodium oxide content of less than 0.30 wt%, then washed with deionized water and filtered for several times, and dried in a 120°C constant temperature oven for 12 hours to produce a catalyst sample, which was denoted as JC-6.

The composition on the dry basis and the dispersion D value of the catalyst sample JC-6 were shown in Table 1.

Example 7

100g of NaY molecular sieve and 1800g of deionized water were mixed and stirred to form a slurry. 20 mL of rare earth chloride solution having a concentration of 357g $RE_2O_3$/L and 2g of ammonium chloride solid were added. The slurry was uniformly stirred and warmed to 70°C. The slurry was adjusted with dilute hydrochloric acid to the pH of 4.5, stirred for 1 hour at the constant temperature, filtered, water-washed, and dried to produce a rare earth NaY molecular sieve.

Pseudo-boehmite and deionized water were mixed and stirred to form a slurry. Hydrochloric acid having a concentration of 36 wt% was added to the obtained slurry to peptize, wherein the acid-alumina ratio (i.e. the weight ratio of said 36wt% hydrochloric acid to pseudo-boehmite on the dry basis) was 0.20. The resulting system was warmed up to 65°C and acidified for 1 hour. Kaolin slurry and alumina sol were added respectively on the dry basis. The mixture was stirred for 20 minutes, and then the above-mentioned rare earth NaY molecular sieve was added thereto. The mixture was stirred for 30 minutes to produce a slurry having a solid content of 30wt%. The resulting slurry was spray-dried to produce microspherical catalyst (having a diameter of 1-150 μm).

In an environment where a pressure was externally applied and 3g sodium hydroxide solid and water were added, the microspherical catalyst was subjected to a pressurized hydrothermal calcining treatment at 400°C under a gauge pressure of 0.8 MPa in 100% water vapour atmosphere for 2 hours. Then the catalyst was washed at 60°C with an aqueous ammonium chloride solution (wherein ammonium chloride:microspherical catalyst:water= 0.2:1:10) to the sodium oxide content of less than 0.30 wt%, then washed with deionized water and filtered for several times, and dried in a 120°C constant temperature oven for 12 hours to produce a catalyst sample, which was denoted as JC-7.

The composition on the dry basis and the dispersion D value of the catalyst sample JC-7 were shown in Table 1.

Comparative Examples 1-7

Comparative Examples 1-7 illustrated comparative samples of the catalysts obtained by hydrothermally calcining at normal pressure.

Comparative Examples 1-7 corresponded to Examples 1-7 in sequence respectively, except that the calcining condition was normal pressure (i.e., the gauge pressure was 0 MPa). The comparative samples of the obtained catalytic cracking catalysts were denoted as DBC-1, DBC-2, DBC-3, DBC-4, DBC-5, DBC-6, and DBC-7 in sequence.

The compositions on the dry basis and the dispersion D values of the catalyst comparative samples DBC-1, DBC-2, DBC-3, DBC-4, DBC-5, DBC-6, and DBC-7 were shown in Table 1.

Reference example 1

Reference Example 1 illustrated a preparation process and a comparative sample of the conventional industrial catalytic cracking catalyst in the prior art. 100g of NaY molecular sieve (Changling Division of Sinopec Catalyst Company, Loss on Ignition: 74.1 wt%, crystallinity: 89.3%, the same below) and 1800g of deionized water were mixed and stirred to form a slurry. 20mL of rare earth chloride solution having a concentration of 357g $RE_2O_3$/L and 2g of ammonium chloride solid were added. The slurry was uniformly stirred and warmed to 70°C. The slurry was adjusted with dilute hydrochloric acid to the pH of 4.5, stirred for 1.0 hour at the constant temperature, filtered, water-washed, dried, and calcined (the first time) to produce a rare earth NaY molecular sieve. The rare earth NaY molecular sieve was slurried and contacted with an ammonium salt solution or an acid solution. The resulting system was filtered, water-washed, dried, and calcined (the second time) to produce a finished product of the rare earth NaY molecular sieve. Pseudo-boehmite and deionized water were mixed and stirred to form a slurry. Hydrochloric acid having a concentration of 36 wt% was added to the obtained slurry to peptize, wherein the acid-alumina ratio (i.e. the weight ratio of said 36wt% hydrochloric acid to pseudo-boehmite on the dry basis) was 0.20. The resulting system was warmed up to 65°C and acidified for 1 hour. Kaolin slurry and alumina sol were added respectively on the dry basis. The mixture was stirred for 20 minutes, and then the above-mentioned finished product of the rare earth NaY molecular sieve was added thereto. The mixture was stirred for 30 minutes to produce a slurry having a solid content of 30wt%. The resulting slurry was spray-dried to produce microspherical catalyst (having a diameter of 1-150 μm).

The microspherical catalyst was calcined at 500°C for 1 hour. Then the catalyst was washed at 60°C with an aqueous ammonium chloride solution (wherein ammonium chloride:microspherical catalyst:water= 0.2:1:10) to the sodium oxide content of less than 0.30 wt%, then washed with deionized water and filtered for several times, and dried in a 120°C constant temperature oven for 12 hours to produce a catalyst sample, which was denoted as DBC-1C.

The composition on the dry basis and the dispersion D value of the catalyst was shown in Table 1.

Table 1

| | Catalyst No. | Rare earth NaY molecular sieve wt% | Kaolin wt% | Peptized pseudo-boehmite wt% | Alumina sol wt% | Dispersion D value |
|---|---|---|---|---|---|---|
| Example 1 | JC-1 | 33 | 42 | 15 | 10 | 94% |
| Example 2 | JC-2 | 33 | 42 | 15 | 10 | 87% |
| Example 3 | JC-3 | 33 | 42 | 15 | 10 | 92% |
| Example 4 | JC-4 | 33 | 42 | 15 | 10 | 89% |
| Example 5 | JC-5 | 33 | 42 | 15 | 10 | 86% |
| Example 6 | JC-6 | 33 | 42 | 15 | 10 | 88% |
| Example 7 | JC-7 | 33 | 42 | 15 | 10 | 91% |
| Comparative Example 1 | DBC-1 | 33 | 42 | 15 | 10 | 76% |
| Comparative Example 2 | DBC-2 | 33 | 42 | 15 | 10 | 70% |
| Comparative Example 3 | DBC-3 | 33 | 42 | 15 | 10 | 75% |
| Comparative Example 4 | DBC-4 | 33 | 42 | 15 | 10 | 73% |
| Comparative Example 5 | DBC-5 | 33 | 42 | 15 | 10 | 68% |
| Comparative Example 6 | DBC-6 | 33 | 42 | 15 | 10 | 75% |
| Comparative Example 7 | DBC-7 | 33 | 42 | 15 | 10 | 73% |
| Reference example 1 | DBC-1C | 37 | 33 | 20 | 10 | 78% |

Test example 1

Test example 1 illustrated the test results of the hydrothermal stability of the catalytic cracking catalyst samples.

Catalytic cracking catalyst samples JC-1 to JC-7 of Examples 1-7 comparative samples DBC-1 to DBC-7 of Comparative Examples 1-7 and comparative sample DBC-1C of Reference Example 1, i.e., fresh samples were hydrothermally aged at 800°C under 100% water vapor for 17 hours respectively to produce aged samples.

The unit cell and crystallinity data of fresh samples and the unit cell and crystallinity data of aged samples were shown in Table 2.

Table 2

| Sample No. | | Fresh sample | | Aged sample | |
|---|---|---|---|---|---|
| | | Unit cell, nm | Crystallinity /%(w) | Unit cell, nm | Crystallinity /%(w) |
| Example 1 | JC-1 | 2.470 | 25.4 | 2.432 | 11.5 |
| Example 2 | JC-2 | 2.469 | 24.9 | 2.431 | 10.8 |

(continued)

| Sample No. | | Fresh sample | | Aged sample | |
|---|---|---|---|---|---|
| | | Unit cell, nm | Crystallinity /%(w) | Unit cell, nm | Crystallinity /%(w) |
| Example 3 | JC-3 | 2.469 | 25.1 | 2.430 | 11.2 |
| Example 4 | JC-4 | 2.470 | 24.8 | 2.431 | 11.0 |
| Example 5 | JC-5 | 2.468 | 25.1 | 2.430 | 10.7 |
| Example 6 | JC-6 | 2.469 | 24.9 | 2.431 | 10.9 |
| Example 7 | JC-7 | 2.470 | 25.2 | 2.431 | 11.1 |
| Comparative Example 1 | DBC-1 | 2.469 | 23.6 | 2.428 | 9.1 |
| Comparative Example 2 | DBC-2 | 2.468 | 23.2 | 2.427 | 8.6 |
| Comparative Example 3 | DBC-3 | 2.467 | 23.4 | 2.428 | 9.2 |
| Comparative Example 4 | DBC-4 | 2.468 | 22.9 | 2.427 | 9.3 |
| Comparative Example 5 | DBC-5 | 2.466 | 23.7 | 2.426 | 8.9 |
| Comparative Example 6 | DBC-6 | 2.468 | 23.0 | 2.427 | 9.1 |
| Comparative Example 7 | DBC-7 | 2.468 | 24.3 | 2.427 | 9.2 |
| Reference Example 1 | DBC-1C | 2.465 | 22.7 | 2.428 | 9.6 |

It could be seen from Table 2 that the aged samples, which were obtained from hydrothermally aging the catalytic cracking catalysts obtained with the preparation process of the present invention at 800°C under 100% water vapor for 17 hours, still had relatively high crystallinity, which was significantly higher than those of the comparative samples, showing that after being treated in a condition of a pressurized water vapor, compared with the calcining in an atmospheric water vapor, the samples could have relatively high hydrothermal stability, and the hydrothermal stability was significantly improved.

Test example 2

Test example 2 illustrated the technical effect of the catalytic cracking catalysts obtained with the preparation process of the present invention.

The above-mentioned catalyst samples JC-1 to JC-7 and the comparative catalyst samples DBC-1 to DBC-7 were hydrothermally aged at 800°C under 100% water vapor for 17 hours respectively, and then subjected to the ACE evaluation.

ACE evaluation conditions: the feedstock oil was a blend of gas oil (Changling Refinery) and residual oil (Changling Refinery) in a ratio of 8:2 (the physical and chemical properties were shown in Table 3), the catalyst-oil ratio was 5.0, the reaction temperature was 520°C, and the regeneration temperature was 600°C.

The evaluation results were shown in Table 4.

Table 3

| Item | VGO |
|---|---|
| Density (293K), g/cm$^3$ | 0.909 |
| Carbon Residue, wt.% | 3.5 |
| Saturates, wt.% | 61.6 |
| Aromatics, wt.% | 26.2 |
| Resins+Asphaltenes, wt.% | 8.9 |

Table 4

| Catalyst | Dry gas wt% | Liquefied gas wt% | Gasoline wt% | Diesel wt% | Slurry oil wt% | Coke factor | Conversion wt% |
|---|---|---|---|---|---|---|---|
| JC-1 | 1.86 | 15.18 | 49.21 | 17.54 | 11.23 | 1.96 | 72.23 |
| JC-2 | 2.05 | 15.57 | 48.86 | 17.68 | 11.45 | 2.06 | 70.91 |
| JC-3 | 2.02 | 15.84 | 48.67 | 17.82 | 11.56 | 2.05 | 70.42 |
| JC-4 | 2.08 | 16.01 | 48.59 | 17.54 | 11.86 | 2.07 | 70.15 |
| JC-5 | 2.21 | 16.40 | 47.95 | 17.86 | 12.03 | 2.12 | 69.84 |
| JC-6 | 2.11 | 16.84 | 47.84 | 17.58 | 11.98 | 2.11 | 70.84 |
| JC-7 | 2.08 | 16.87 | 47.98 | 17.24 | 11.87 | 2.08 | 71.01 |
| DBC-1 | 2.34 | 16.92 | 47.29 | 16.54 | 11.86 | 2.10 | 69.84 |
| DBC-2 | 2.45 | 16.81 | 47.12 | 16.59 | 11.95 | 2.11 | 69.75 |
| DBC-3 | 2.58 | 16.76 | 47.02 | 16.75 | 12.01 | 2.12 | 69.58 |
| DBC-4 | 2.45 | 16.48 | 46.89 | 16.41 | 12.24 | 2.20 | 68.79 |
| DBC-5 | 2.47 | 16.95 | 47.15 | 16.47 | 12.21 | 2.25 | 69.75 |
| DBC-6 | 2.19 | 17.02 | 47.24 | 16.53 | 12.12 | 2.21 | 69.42 |
| DBC-7 | 2.15 | 16.89 | 47.29 | 16.84 | 12.01 | 2.13 | 69.97 |
| DBC-1C | 2.26 | 16.83 | 47.55 | 16.39 | 11.57 | 2.26 | 72.04 |

It could be seen from Table 4 that the catalytic cracking catalyst of the present invention had excellent heavy oil conversion ability and higher gasoline yield. For example, compared with the DBC-1C comparative sample (having a molecular sieve content of 37%), the JC-1 sample of the present invention (having a molecular sieve content of 33%) showed excellent heavy oil cracking activity, i.e., an equivalent conversion rate, a higher gasoline yield (increased by 1.7%), a higher diesel yield (increased by 1.1%), and a lower coke factor (decreased by 0.30).

Example 8

This example was performed in the same manner as Example 1, except that in the composition on the dry basis of the catalyst, the content of the inorganic oxide binder was changed to 30%, the content of the natural mineral was changed to 33%, and the content of the rare earth-containing NaY molecular sieve was changed to 37%.
The obtained catalytic cracking catalyst sample was denoted as JC-8.
The composition on the dry basis and the dispersion D value of the sample JC-8 were shown in Table 5, the unit cell and crystallinity data of the fresh sample and the unit cell and crystallinity data of the aged sample were shown in Table 6, and the ACE evaluation result was shown in Table 7.

Example 9

This example was performed in the same manner as Example 1, except that in the composition on the dry basis of the catalyst, the content of the inorganic oxide binder was changed to 22%, the content of the natural mineral was changed to 48%, and the content of the rare earth-containing NaY molecular sieve was changed to 30%.
The obtained catalytic cracking catalyst sample was denoted as JC-9.
The composition on the dry basis and the dispersion D value of the sample JC-9 were shown in Table 5, the unit cell and crystallinity data of the fresh sample and the unit cell and crystallinity data of the aged sample were shown in Table 6, and the ACE evaluation result was shown in Table 7.

Example 10

This example was performed in the same manner as Example 1, except that in the composition on the dry basis of the catalyst, the content of the inorganic oxide binder was changed to 15%, the content of the natural mineral was changed to 35%, and the content of the rare earth-containing NaY molecular sieve was changed to 50%.

The obtained catalytic cracking catalyst sample was denoted as JC-10.

The composition on the dry basis and the dispersion D value of the sample JC-10 were shown in Table 5, the unit cell and crystallinity data of the fresh sample and the unit cell and crystallinity data of the aged sample were shown in Table 6, and the ACE evaluation result was shown in Table 7.

Comparative Examples 8-10

Comparative Examples 8-10 illustrated comparative samples of the catalysts obtained by hydrothermally calcining at normal pressure.

Comparative Examples 8-10 corresponded to Examples 8-10 in sequence respectively, except that the calcining condition was normal pressure (i.e., the gauge pressure was 0 MPa). The obtained catalytic cracking catalyst comparative samples were denoted as DBC-8, DBC-9, and DBC-10.

The compositions on the dry basis and the dispersion D values of the comparative samples DBC-8, DBC-9, and DBC-10 were shown in Table 5, the unit cell and crystallinity data of the fresh samples and the unit cell and crystallinity data of the aged samples were shown in Table 6, and the ACE evaluation results were shown in Table 7.

Table 5

| | Catalyst No. | Rare earth NaY molecular sieve wt% | Kaolin wt% | Peptized pseudo-boehmite wt% | Alumina sol wt% | Dispersion D value |
|---|---|---|---|---|---|---|
| Example 8 | JC-8 | 37 | 33 | 15 | 15 | 95% |
| Example 9 | JC-9 | 30 | 48 | 15 | 7 | 89% |
| Example 10 | JC-10 | 50 | 35 | 10 | 5 | 98% |
| Comparative Example 8 | DBC-8 | 37 | 33 | 15 | 15 | 75% |
| Comparative Example 9 | DBC-9 | 30 | 48 | 15 | 7 | 68% |
| Comparative Example 10 | DBC-9 | 50 | 35 | 10 | 5 | 64% |

Table 6

| Sample No. | | Fresh sample | | Aged sample | |
|---|---|---|---|---|---|
| | | Unit cell, nm | Crystallinity /%(w) | Unit cell, nm | Crystallinity /%(w) |
| Example 8 | JC-8 | 2.470 | 28.5 | 2.432 | 12.9 |
| Example 9 | JC-9 | 2.469 | 23.1 | 2.430 | 10.5 |
| Example 10 | JC-10 | 2.471 | 38.5 | 2.435 | 17.4 |
| Comparative Example 8 | DBC-8 | 2.469 | 26.5 | 2.428 | 10.2 |
| Comparative Example 9 | DBC-9 | 2.467 | 21.5 | 2.425 | 8.3 |
| Comparative Example 10 | DBC-10 | 2.469 | 35.8 | 2.430 | 13.8 |

Table 7

| Catalyst | Dry gas wt% | Liquefied gas wt% | Gasoline wt% | Diesel wt% | Slurry oil wt% | Coke factor | Conversion wt% |
|---|---|---|---|---|---|---|---|
| JC-8 | 1.91 | 15.61 | 50.62 | 18.04 | 10.51 | 2.02 | 74.30 |
| JC-9 | 1.79 | 14.63 | 47.42 | 16.90 | 13.57 | 1.89 | 69.60 |

(continued)

| Catalyst | Dry gas wt% | Liquefied gas wt% | Gasoline wt% | Diesel wt% | Slurry oil wt% | Coke factor | Conversion wt% |
|---|---|---|---|---|---|---|---|
| JC-10 | 2.37 | 16.98 | 52.56 | 19.58 | 6.45 | 1.96 | 78.97 |
| DBC-8 | 2.42 | 16.40 | 48.97 | 16.84 | 11.35 | 2.12 | 70.23 |
| DBC-9 | 2.13 | 15.69 | 45.21 | 15.12 | 14.67 | 2.01 | 66.97 |
| DBC-10 | 2.31 | 17.54 | 50.11 | 17.89 | 8.79 | 2.08 | 75.73 |

Example 11

This example was performed in the same manner as Example 1, excpet that kaolin as the natural mineral was changed to montmorillonite, and (peptized pseudo-boehmite and alumina sol) as binder was changed to (peptized pseudo-boehmite and silica-alumina sol).
The obtained catalytic cracking catalyst sample was denoted as JC-11.
The composition on the dry basis and the dispersion D value of the sample JC-11 were shown in Table 8, the unit cell and crystallinity data of the fresh sample and the unit cell and crystallinity data of the aged sample were shown in Table 9, and the ACE evaluation result was shown in Table 10.

Example 12

This example was performed in the same manner as Example 1, excpet that kaolin as the natural mineral was changed to rectorite, and (peptized pseudo-boehmite and alumina sol) as binder was changed to (silica sol and alumina sol).
The obtained catalytic cracking catalyst sample was denoted as JC-12.
The composition on the dry basis and the dispersion D value of the sample JC-12 were shown in Table 8, the unit cell and crystallinity data of the fresh sample and the unit cell and crystallinity data of the aged sample were shown in Table 9, and the ACE evaluation result was shown in Table 10.

Table 8

| | Catalyst No. | Rare earth NaY molecular sieve, wt% | Natural mineral wt% | Inorganic oxide binder wt% | wt% | Dispersion D value |
|---|---|---|---|---|---|---|
| Example 1 | JC-1 | 33 | Kaolin 42 | Peptized pseudo-boehmite 15 | Alumina sol 10 | 93% |
| Example 11 | JC-11 | 33 | Montmorillonite 42 | Peptized pseudo-boehmite 15 | Silica-alumina sol 10 | 88% |
| Example 12 | JC-12 | 33 | Rectorite 42 | Silica sol 15 | Alumina sol 10 | 90% |

Table 9

| Sample No. | | Fresh sample | | Aged sample | |
|---|---|---|---|---|---|
| | | Unit cell, nm | Crystallinity /%(w) | Unit cell, nm | Crystallinity /%(w) |
| Example 1 | JC-1 | 2.470 | 25.4 | 2.432 | 11.5 |
| Example 11 | JC-11 | 2.470 | 25.2 | 2.431 | 10.9 |
| Example 12 | JC-12 | 2.470 | 25.1 | 2.431 | 11.1 |

Table 10

| Catalyst | Dry gas wt% | Liquefied gas wt% | Gasoline wt% | Diesel wt% | Slurry oil wt% | Coke factor | Conversion wt% |
|---|---|---|---|---|---|---|---|
| JC-1 | 1.86 | 15.18 | 49.21 | 17.54 | 11.23 | 1.96 | 72.23 |
| JC-11 | 1.80 | 14.68 | 47.58 | 16.96 | 12.86 | 1.89 | 69.83 |
| JC-12 | 1.82 | 15.12 | 48.57 | 17.10 | 12.02 | 1.94 | 71.08 |

In the present invention, the sum of the weight percentages of the components of the composition is 100wt%.

The preferred embodiments of the present invention have been described in detail above, but the present invention is not limited to the specific details in the above embodiments. Within the scope of the technical concept of the present invention, various simple modifications can be made to the technical solutions of the present invention. These simple modifications all belong to the protection scope of the present invention.

It should also be noted that the various specific technical features described in the above specific embodiments can be combined in any suitable way without contradiction. In order to avoid unnecessary repetition, the present invention will not separately explain various possible combination manners.

In addition, various combinations of different embodiments of the present invention can also be combined arbitrarily, as long as they do not violate the idea of the present invention, they should also be regarded as the disclosed contents of the present invention.

**Claims**

1. A catalytic cracking catalyst, which is **characterized in that** the catalyst contains a rare earth-containing molecular sieve, and the rare earth dispersion D value of the catalyst is 0.8-1, preferably 0.85-0.99, more preferably 0.86-0.98.

2. The catalytic cracking catalyst according to any of the previous claims, which is **characterized in that** said rare earth-containing molecular sieve has a FAU structure, preferably said rare earth-containing molecular sieve is a rare earth-containing Y-type molecular sieve.

3. The catalytic cracking catalyst according to any of the previous claims, which is **characterized in that** on the 100 wt% dry basis, the catalytic cracking catalyst contains:

   10-30 wt% of an inorganic oxide binder,
   30-50 wt% of a natural mineral, and
   20-60 wt% of a rare earth-containing molecular sieve;
   preferably, the catalytic cracking catalyst contains:
   15-30 wt% of an inorganic oxide binder,
   33-48 wt% of a natural mineral, and
   30-50 wt% of a rare earth-containing molecular sieve.

4. The catalytic cracking catalyst according to any of the previous claims, which is **characterized in that** on the dry basis, the alkali metal content of the catalytic cracking catalyst (as oxide) is ≤0.3 wt%, preferably, ≤0.2 wt%.

5. The catalytic cracking catalyst according to any of the previous claims, which is **characterized in that** the crystallinity retention of the catalytic cracking catalyst is 42.5%-45.5%, wherein

crystallinity retention (%) = 100 - (crystallinity of fresh sample - crystallinity of aged sample)/crystallinity of fresh sample * 100,

the aged sample is obtained by aging a fresh sample at 800°C in a 100% water vapor for 17 hours.

6. A process for preparing the catalytic cracking catalyst according to any of previous claims, which is **characterized in that** the process comprises:

(1) contacting a molecular sieve (e.g. NaY molecular sieve) with a rare-earth salt solution or a mixed solution of rare-earth salt solution and ammonium salt solution, and filtering and water-washing the obtained rare earth-containing molecular sieve;
(2) mixing raw materials including an inorganic oxide binder, a natural mineral, and a rare earth-containing molecular sieve, slurrying, and shaping to obtain shaped bodies;
(3) hydrothermally calcining the shaped bodies in an atmosphere condition where a pressure is externally applied and an aqueous solution containing an acidic substance or an alkaline substance is extennally added;
(4) ammonium-exchanging the product of step (3).

7. The process according to any of previous claims, wherein

the rare-earth salt solution is selected from an aqueous solution of one of or two or more of lanthanum chloride, cerium chloride, praseodymium chloride, and neodymium chloride;
the ammonium salt solution is selected from one of or a mixture of two or more of ammonium chloride solution, ammonium nitrate solution, ammonium carbonate solution and ammonium bicarbonate solution.

8. The process according to any of previous claims, wherein the contacting of the molecular sieve and a rare-earth salt solution or a mixed solution of rare-earth salt solution and ammonium salt is performed at a pH of 3.0-5.0 at a weight ratio of water to molecular sieve of 5-30 at room temperature to 100°C (for example 40-90°C).

9. The process according to any of previous claims, wherein in said rare earth containing molecular sieve, as rare earth oxide, the rare earth content is 1-20 wt%, preferably 8-15 wt%, the unit cell constant is 2.440-2.470 nm, and the crystallinity is 30-60%.

10. The process according to any of previous claims, wherein, said inorganic oxide binder is at least one selected from silica sol, alumina sol, peptized pseudo-boehmite, silica alumina sol and phosphorus-containing alumina sol; preferably, said peptized pseudo-boehmite is obtained by mixing pseudo-boehmite and water, slurrying to form a slurry, and adding hydrochloric acid into the slurry for acidification, the weight ratio of said hydrochloric acid to pseudo-boehmite on the dry basis is 0.05-0.50;
more preferably, said inorganic oxide binder is pseudo-boehmite and alumina sol, preferably in a weight ratio of (0.1-2): 1.

11. The process according to any of previous claims, wherein said natural mineral is at least one selected from kaolin, halloysite, montmorillonite, diatomite, attapulgite, sepiolite, keramite, hydrotalcite, bentonite and rectorite.

12. The process according to any of previous claims, wherein said shaping is pelleting by spray-drying.

13. The process according to any of previous claims, wherein

the acidic substance is one of or a mixture of two or more of ammonium chloride, ammonium sulfate, ammonium carbonate, ammonium bicarbonate, ammonium carbonate, ammonium phosphate, ammonium dihydrogen phosphate, diammonium hydrogen phosphate, hydrochloric acid, sulfuric acid and nitric acid; and
the alkaline substance is selected from one of or a mixture of two or more of ammonia water, a buffer solution of ammonia water and ammonium chloride, sodium hydroxide, sodium carbonate, and sodium bicarbonate;
the gauge pressure of the atmosphere condition is 0.01-1.0 MPa, for example 0.1-0.8 MPa, preferably 0.3-0.6 MPa;
the atmosphere condition contains 1-100% water vapor, for example 30%-100% water vapor, preferably 60-100% water vapor;
the treatment of hydrothermally calcining is performed at 300-800°C,
preferably 400-600°C.

14. The process according to any of previous claims, wherein said raw materials further include ZSM-5 molecular sieve.

15. A system for preparing the catalytic cracking catalyst according to any of claims 1-5, which is **characterized in that** said system is mainly composed of a molecular sieve (e.g. NaY molecular sieve)-rare earth exchanging device, a raw material mixing device, a shaping device, and a pressurized hydrothermal calcining device, wherein,

the molecular sieve-rare earth exchanging device comprises an equipment for introducing the rare-earth salt solution or an equipment for introducing the rare-earth salt solution and the ammonium salt solution, and a filtering equipment and a water-washing equipment;
said raw material mixing device receives the catalyst raw materials including a rare earth-containing molecular sieve obtained from the molecular sieve-rare earth exchanging device, and an inorganic oxide binder from the inorganic oxide binder-treating device;
said shaping device is a device of shaping by spray-drying; and
said pressurized hydrothermal calcining device is provided with an inlet of the aqueous solution containing an acidic substance or an alkaline substance, and a gas pressurization joint.

Figure 1

NaY molecular sieve

↓

Rare earth exchanging

↓

Filtering, water-washing

↓

Raw material mixing and shaping

↓

Pressurized hydrothermal calcining

↓

Post-washing

↓

Drying → Finished cracking agent product

Figure 2

| INTERNATIONAL SEARCH REPORT | International application No. |
|---|---|
| | **PCT/CN2022/071293** |

**A.    CLASSIFICATION OF SUBJECT MATTER**

B01J 29/08(2006.01)i;  B01J 35/10(2006.01)i;  B01J 37/10(2006.01)i;  C10G 11/05(2006.01)i

According to International Patent Classification (IPC) or to both national classification and IPC

**B.    FIELDS SEARCHED**

Minimum documentation searched (classification system followed by classification symbols)

B01J29/-; B01J35/-; B01J37/-; C10G11/-

Documentation searched other than minimum documentation to the extent that such documents are included in the fields searched

Electronic data base consulted during the international search (name of data base and, where practicable, search terms used)

CNABS, CNTXT, CNKI, VEN, web of science: 催化裂化, 分子筛, 稀土, 水热, 焙烧, 煅烧, 电子探针显微镜, 分散度, FCC, cataly+, crack+, rare earth, hydrothermal, calcination+, electro+, probe, micro+, analysis, EPMA, disper+

**C.    DOCUMENTS CONSIDERED TO BE RELEVANT**

| Category* | Citation of document, with indication, where appropriate, of the relevant passages | Relevant to claim No. |
|---|---|---|
| PX | CN 112206810 A (CHINA PETROLEUM & CHEMICAL CORPORATION et al.) 12 January 2021 (2021-01-12)<br>     description, paragraphs [0007]-[0017] | 1-5 |
| PY | CN 112206810 A (CHINA PETROLEUM & CHEMICAL CORPORATION et al.) 12 January 2021 (2021-01-12)<br>     description, paragraphs [0007]-[0017] | 6-15 |
| PX | TW 202104082 A (CHINA PETROCHEMICAL TECHNOLOGY CO., LTD.) 01 February 2021 (2021-02-01)<br>     description, paragraphs [0017]-[0023] | 1-5 |
| PY | TW 202104082 A (CHINA PETROCHEMICAL TECHNOLOGY CO., LTD.) 01 February 2021 (2021-02-01)<br>     description, paragraphs [0017]-[0023] | 6-15 |
| PY | CN 113318777 A (CHINA PETROLEUM & CHEMICAL CORPORATION) 31 August 2021 (2021-08-31)<br>     description, paragraphs [0012]-[0022] | 6-15 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 March 2022** | **08 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/071293**

**C.    DOCUMENTS CONSIDERED TO BE RELEVANT**

| Category* | Citation of document, with indication, where appropriate, of the relevant passages | Relevant to claim No. |
|---|---|---|
| PY | CN 113318778 A (CHINA PETROLEUM & CHEMICAL CORPORATION et al.) 31 August 2021 (2021-08-31)<br>description, paragraphs [0010]-[0020] | 6-15 |
| A | CN 101385983 A (CHINA PETROLEUM & CHEMICAL CORPORATION et al.) 18 March 2009 (2009-03-18)<br>description, entire document | 1-15 |
| A | US 2020009541 A1 (CHINA PETROLEUM & CHEM CORP. et al.) 09 January 2020 (2020-01-09)<br>description, entire document | 1-15 |

Form PCT/ISA/210 (second sheet) (January 2015)

**INTERNATIONAL SEARCH REPORT**
**Information on patent family members**

International application No.

**PCT/CN2022/071293**

| Patent document cited in search report | | | Publication date (day/month/year) | Patent family member(s) | | | Publication date (day/month/year) |
|---|---|---|---|---|---|---|---|
| CN | 112206810 | A | 12 January 2021 | None | | | |
| TW | 202104082 | A | 01 February 2021 | WO | 2021004502 | A1 | 14 January 2021 |
| CN | 113318777 | A | 31 August 2021 | None | | | |
| CN | 113318778 | A | 31 August 2021 | None | | | |
| CN | 101385983 | A | 18 March 2009 | None | | | |
| US | 2020009541 | A1 | 09 January 2020 | WO | 2018153301 | A1 | 30 August 2018 |
| | | | | TW | 201833028 | A | 16 September 2018 |
| | | | | SG | 11201907465 W | A | 27 September 2019 |
| | | | | JP | 2020508279 | A | 19 March 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3402996 A
- CN 1026225 C
- CN 103508467 A

**Non-patent literature cited in the description**

- *Zeolite,* 1986, vol. 6 (4), 235